(19) Europäisches Patentamt
European Patent Office
Office européen des brevets

(11) Veröffentlichungsnummer: **0 056 964**
**B1**

(12) # EUROPÄISCHE PATENTSCHRIFT

(45) Veröffentlichungstag der Patentschrift: **22.05.85**

(51) Int. Cl.⁴: **C 08 L 51/00**, C 08 L 51/04, C 08 L 71/04

(21) Anmeldenummer: **82100304.3**

(22) Anmeldetag: **18.01.82**

(54) **Thermoplastische Formmasse enthaltend ein Styrolpolymerisat, einen gepropften Polyacrylsäureester und einen Polyphenylenether.**

(30) Priorität: **24.01.81 DE 3102253**

(43) Veröffentlichungstag der Anmeldung: **04.08.82 Patentblatt 82/31**

(45) Bekanntmachung des Hinweises auf die Patenterteilung: **22.05.85 Patentblatt 85/21**

(84) Benannte Vertragsstaaten: **BE DE FR GB IT NL**

(56) Entgegenhaltungen: **US - A - 4 128 602**

(73) Patentinhaber: **BASF Aktiengesellschaft, Carl-Bosch-Strasse 38, D-6700 Ludwigshafen (DE)**

(72) Erfinder: **Brandstetter, Franz, Dr., Ritterbuechel 45, D-6730 Neustadt (DE)**
Erfinder: **Hambrecht, Juergen, Dr., Werderstrasse 30, D-6900 Heidelberg (DE)**
Erfinder: **Echte, Adolf, Dr., Leuschnerstrasse 42, D-6700 Ludwigshafen (DE)**

**EP 0 056 964 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft thermoplastische Formmassen auf der Grundlage von schlagfest modifizierten Styrolpolymerisaten und Polyphenylenethern.

Thermoplastische Massen, die sich zur Herstellung von Formteilen eignen und die schlagzäh modifizierte Styropolymerisate und Polyphenylenether enthalten, sind z.B. aus den US-Patentschriften 3383435, 4128602 sowie 4128603 bekannt. Als Weichkomponente wird hierbei meist Polybutadien verwendet. Daneben sind auch thermoplastische Massen, die sich zur Herstellung von Formteilen eignen, und die Polyphenylenether und schlagzäh modifizierte Styrolpolymerisate enthalten, wobei als Weichkomponente ein Polymerisat auf der Basis von Acrylsäureestern eingesetzt wird, z.B. aus der japanischen Auslegeschrift 77/32800 bekannt. Diese Formmassen eignen sich zur Herstellung von Formteilen, die sich einmal im Vergleich zu schlagzäh modifizierten Styrolpolymerisaten, die nicht mit Polyphenylenethern abgemischt sind, durch eine bessere Wärmeformbeständigkeit und die sich zum anderen im Vergleich zu Formmassen aus Polyphenylenethern und schlagfest modifizierten Styrolpolymerisaten, die eine Weichkomponente mit vielen Doppelbindungen enthalten, durch eine verbesserte Alterungsbeständigkeit auszeichnen. Die Materialeigenschaften derartiger Formmassen sind im allgemeinen zufriedenstellend, doch hat es sich gezeigt, dass sie ein ungünstiges Fliessverhalten aufweisen.

Der Erfindung lag daher die Aufgabe zugrunde, thermoplastische Formmassen auf der Grundlage von schlagfest modifizierten Styrolpolymerisaten und Polyphenylenethern zu schaffen, die eine verbesserte Fliessfähigkeit besitzen und zu Formteilen mit einer guten Alterungsbeständigkeit führen. Diese Aufgabe wird erfindungsgemäss gelöst durch thermoplastische Formmassen aus einer Mischung von

a) einem Styrolpolymerisat mit einer Viskositätszahl (nach DIN 53726) im Bereich von 40 bis 140 ml/g als Hartkomponente,
b) einem vernetzten und bis zu einem Pfropfgrad von 10 bis 60 Gew.% mit Styrol gepfropften Polyacrylsäureester mit 2 bis 8 Kohlenstoffatomen im Alkylrest und mit einer Glasübergangstemperatur unter 0°C als Weichkomponente und
c) einem Polyphenylenether mit mindestens 50 Benzolkernen in der Kette.

Im Gewichtsverhältnis a : b wie (95 bis 40) : (5 bis 60) und (a + b) : c wie (5 bis 90) : (95 bis 10), dadurch gekennzeichnet, dass die Weichkomponente in b 0,5 bis 20 Gew.% des Acrylsäureesters des Tricyclodecenylalkohols der Formel I

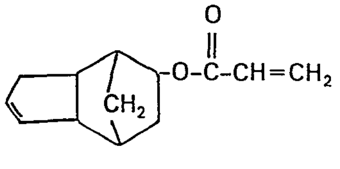

I

als Vernetzer einpolymerisiert enthält. Unter Formmassen sollen Mischungen verstanden werden, die sich durch thermoplastische Verarbeitung innerhalb bestimmter Temperaturbereiche zu Formteilen oder zu Halbzeug verarbeiten lassen. Die Formmassen können als Granulat vorliegen, sie können aber auch pulverförmig oder durch Tablettierung vorgeformt oder in Form von Platten und Bahnen vorliegen. Die Herstellung der in den Formmassen enthaltenen schlagfest modifizierten Styrolpolymerisate kann nach beliebigen Verfahren erfolgen, sofern dafür gesorgt ist, dass die oben genannten Mengen des Acrylsäureesters des Tricyclodecenylalkohols verwendet werden. Besonders geeignet sind Formmassen, die eine Weichkomponente enthalten, die in Gegenwart von 2 bis 10 Gew.%, bezogen auf die Weichkomponente, des Acrylesters des Tricyclodecenylalkohols hergestellt wurde.

Die thermoplastischen Formmassen können schlagfest modifizierte Styrolpolymerisate und Polyphenylenether in fast beliebigen Mengenverhältnissen, beispielsweise von 5 bis 90 Gew.% modifiziertes Styrolpolymerisat und 95 bis 10 Gew.% Polyphenylenether enthalten. Für die Herstellung von Formteilen eignen sich insbesondere solche Formmassen, die 20 bis 80 Gew.% schlagfest modifizierte Styrolpolymerisate und 80 bis 20 Gew.% Polyphenylenether enthalten.

Als Hartkomponente kommen Homo- und Mischpolymerisate des Styrols und der kern- oder seitenkettenalkylierten Styrole in Betracht. Vorzugsweise wird Styrol allein verwendet.

Die Hartkomponente kann nach den herkömmlichen Methoden erhalten werden. So kann die Polymerisation des Styrols in Masse, Lösung, Suspension oder wässriger Emulsion durchgeführt werden.

Die Hartkomponente hat vorzugsweise eine Viskositätszahl von 40 bis 140, insbesondere von 80 bis 120 ml/g. Die Bestimmung der Viskositätszahl erfolgt nach DIN 53 726; dabei werden 0,5 g Material in 100 ml Toluol gelöst.

Die Herstellung des erfindungsgemäss einzusetzenden Pfropfmischpolymerisates als Weichkomponente erfolgt nach den an sich bekannten Methoden in gebräuchlicher Art und Weise. Als Pfropfgrundlage dient ein wie unten beschrieben vernetztes Acrylsäureester-Polymerisat mit einer Glasübergangstemperatur unter 0°C. Das vernetzte Acrylsäureester-Polymerisat soll vorzugsweise eine Glastemperatur unter –20°C, insbesondere unter –30°C besitzen. Die Ermittlung der Glasübergangstemperatur des Acrylsäureester-Polymerisates kann z.B. nach der DSC-Methode (K.H. Illers, Makromol. Chemie 127 (1969), S. 1) erfolgen. Für die Herstellung der Acrylsäureester-Polymerisate kommen insbesondere die Acrylalkylester mit 2 bis 8 Kohlenstoffatomen, vorzugsweise 4 bis 8 Kohlenstoffatomen, im Alkylrest in Betracht. Als Acrylsäurealkylester, die zur Herstellung der Acrylsäureester-Polymerisate geeignet sind, seien besonders Acrylsäure-n-butylester und Acrylsäureäthylhexylester genannt.

Die Acrylsäureester können bei der Herstellung der als Pfropfgrundlage dienenden Acrylsäureester-Polymerisate allein oder auch in Mischung eingesetzt werden.

Um vernetzte Acrylsäureester-Polymerisate zu erhalten, wie sie als Pfropfgrundlagen für die Herstellung der Pfropfmischpolymerisate eingesetzt werden sollen, wird die Polymerisation der Acrylsäureester erfindungsgemäss in Gegenwart von 1 bis 20 Gew.%, vorzugsweise 2 bis 10 Gew.%, bezogen auf die bei der Herstellung der Pfropfgrundlagen eingesetzten gesamten Monomeren des Acrylsäureesters des Tricyclodecenylalkohols durchgeführt (vgl. DE-PS 12 60 135).

Die Herstellung des erfindungsgemäss einzusetzenden Pfropfmischpolymerisats kann beispielsweise nach der in der DE-PS 12 60 135 beschriebenen Methode erfolgen. Hierzu wird zunächst die Pfropfgrundlage hergestellt, indem der oder die Acrylsäureester des Tricyclodecenylalkohols, gegebenenfalls zusammen mit den weiteren Comonomeren, in wässriger Emulsion in an und für sich bekannter Weise bei Temperaturen zwischen 20 und 100°C, vorzugsweise zwischen 50 und 80°C polymerisiert werden. Es können die üblichen Emulgatoren, wie z.B. Alkalisalze von Alkyl- oder Alkylarylsulfonsäuren, Alkylsulfate,Fettalkoholsulfonate, Salze höherer Fettsäuren mit 10 bis 30 Kohlenstoffatomen oder Harzseifen, verwendet werden. Vorzugsweise nimmt man die Natriumsalze von Alkylsulfonaten oder Fettsäuren mit 10 bis 18 Kohlenstoffatomen. Es ist günstig, die Emulgatoren in Mengen von 0,1 bis 5 Gew.%, insbesondere von 0,5 bis 2 Gew.%, bezogen auf die bei der Herstellung der Pfropfgrundlage eingesetzten Monomeren, einzusetzen. Im allgemeinen wird bei einem Wasser- zu Monomeren-Verhältnis von 2:1 bis 0,7:1 gearbeitet. Als Polymerisationsinitiatoren dienen insbesondere die gebräuchlichen Persulfate, wie z.B. Kaliumpersulfat, es können jedoch auch Redox-Systeme zum Einsatz gelangen. Die Initiatoren werden im allgemeinen in Mengen von 0,1 bis 1 Gew.%, bezogen auf die bei der Herstellung der Pfropfgrundlage eingesetzten Monomeren, eingesetzt. Als weitere Polymerisationshilfsstoffe können die üblichen Puffersubstanzen, durch welche pH-Werte von vorzugsweise 6 bis 9 eingestellt werden – z.B. Natriumbicarbonat und Natriumpyrophosphat –, sowie 0 bis 3 Gew.% eines Molekulargewichtsreglers – wie Mercaptane, Terpene oder dimeres $\alpha$-Methylstyrol – bei der Polymerisation verwendet werden. Die genauen Polymerisationsbedingungen, insbesondere Art, Dosierung und Menge des Emulgators, werden innerhalb der oben angegebenen Bereiche im einzelnen so bestimmt, dass der erhaltene Latex des vernetzten Acrylsäureester-Polymerisats einen $d_{50}$-Wert (mittleren Teilchendurchmesser) im Bereich von 0,05 bis 0,15 µm, vorzugsweise im Bereich von 0,06 bis 0,12 µm besitzt.

Zur Herstellung des Pfropfmischpolymerisats wird dann in einem zweiten Schritt in Gegenwart des so erhaltenen Latex des Acrylsäureesterpolymerisats Styrol polymerisiert. Es ist vorteilhaft, diese Pfropfmischpolymerisation von Styrol auf das als Pfropfgrundlage dienende Acrylsäureester-Polymerisat wieder in wässriger Emulsion unter den üblichen, oben aufgeführten Bedingungen durchzuführen. Die Pfropfmischpolymerisation kann zweckmässig im gleichen System erfolgen wie die Emulsionspolymerisation zur Herstellung der Pfropfgrundlage, wobei, falls notwendig, weiterer Emulgator und Initiator zugegeben werden kann. Das aufzupfropfende Styrol kann dem Reaktionsgemisch auf einmal, absatzweise in mehreren Stufen oder vorzugsweise während der Polymerisation zugegeben werden. Die Pfropfmischpolymerisation von Styrol in Gegenwart des vernetzten Acrylsäureester-Polymerisates wird so geführt, dass ein Pfropfgrad von 10 bis 60 Gew.%, vorzugsweise von 30 bis 40 Gew.% im Pfropfmischpolymerisat resultiert. Da die Pfropfausbeute bei dieser Pfropfmischpolymerisation nicht 100%ig ist, muss eine etwas grössere Menge an Styrol bei der Pfropfmischpolymerisation eingesetzt werden, als es dem gewünschten Pfropfgrad entspricht. Die Steuerung der Pfropfausbeute bei der Pfropfmischpolymerisation und somit des Pfropfgrades des fertigen Pfropfmischpolymerisats ist jedem Fachmann geläufig und kann beispielsweise u.a. durch die Dosiergeschwindigkeit der Monomeren oder durch Reglerzugabe erfolgen (Chauvel, Daniel, ACS Polymer Preprints 15 (1974), Seite 329 ff.). Bei der Emulsions-Pfropfmischpolymerisation entstehen im allgemeinen etwa 5 bis 15 Gew.%, bezogen auf das Pfropfmischpolymerisat, an freiem ungepfropftem Styrol-Polymerisat.

Je nach den bei der Pfropfmischpolymerisation für die Herstellung der Pfropfmischpolymerisate gewählten Bedingungen kann es möglich sein, dass bei der Pfropfmischpolymerisation schon ein hinreichender Anteil an Hartkomponente gebildet worden ist. Im allgemeinen wird es jedoch nötig sein, die bei der Pfropfmischpolymerisation erhaltenen Produkte mit zusätzlicher, separat hergestellter Hartkomponente zu mischen.

Unter Weichkomponente im Sinne dieser Erfindung wird der bei Raumtemperatur (25°C) in Toluol unlösliche Anteil des schlagfest modifizierten Polymerisats abzüglich etwaiger Pigmente verstanden. Die Weichkomponente entspricht also dem Gelanteil des Produktes.

Die mittlere Teilchengrösse und die Teilchengrössenverteilung wurde aus der integralen Massenverteilung nach der Methode von W. Scholtan und H. Lange, Kolloid-Z. und Z.-Polymere 250 (1972), Seiten 782 bis 796, mittels einer analytischen Ultrazentrifuge bestimmt. Die Ultrazentrifugenmessung liefert die integrale Massenverteilung des Teilchendurchmessers einer Probe. Hieraus lässt sich entnehmen, wieviel Gewichtsprozent der Teilchen einen Durchmesser gleich oder kleiner einer bestimmten Grösse haben. Der mittlere Teilchendurchmesser, der auch als $d_{50}$-Wert der integralen Massenverteilung bezeichnet wird, ist dabei als der Teilchendurchmesser definiert.

Bei den Polyphenylenethern handelt es sich um Verbindungen auf der Basis von in ortho-Position disubstituierten Polyphenylenoxiden, wobei der Ethersauerstoff der einen Einheit an den Benzolkern der benachbarten Einheit gebunden ist. Dabei sollen mindestens 50 Einheiten miteinander verknüpft sein. Die Polyphenylenether können in ortho-Stellung zum Sauerstoff Wasserstoff, Halogen, Kohlenwasserstoffe, die kein α-ständiges tert. Wasserstoffatom besitzen, Halogenkohlenwasserstoffe, Phenylreste und Kohlenwasserstoff-oxi-Reste tragen. So kommen in Frage: Poly(2,6-dichlor-1,4-phenylen)-ether, Poly(2,6-diphenyl-1,4-phenylen)-ether, Poly(2,6-dimethoxy-1,4-phenylen)ether, Poly(2,6-dimethyl-1,4-phenylen)ether, Poly(2,6-dibrom-1,4-phenylen)ether. Bevorzugterweise wird der Poly(2,6-dimethyl-1,4-phenylen)ether eingesetzt. Besonders bevorzugt werden Poly-(2,6-dimethyl-1,4-phenylen)ether mit einer Grenzviskosität zwischen 0,45 und 0,65 dl/g (gemessen in Chloroform bei 30°C).

Die Polyphenylenether können z.B. in Gegenwart von komplexbildenden Mitteln wie Kupferbromid und sek.-Dibutylamin aus den Phenolen hergestellt werden.

Die Mischungen aus den schlagzäh modifizierten Styrolpolymerisaten und Polyphenylenethern können ausserdem weitere Zusatzstoffe wie Pigmente, Farbstoffe, Füllstoffe, Flammschutzmittel, weitere verträgliche Polymere, Antistatika, Antioxidantien und Schmiermittel enthalten.

Durch Mischen der Weich- und Hartkomponente und der Polyphenylenether gelangt man zu den erfindungsgemässen thermoplastischen Formmassen. Üblicherweise erfolgt dies auf Vorrichtungen, die ein homogenes Mischen zulassen, wie Knetern, Extrudern oder Walzenmischgeräten. Neben dem guten Fliessverhalten besitzen die erfindungsgemässen Formmassen noch eine gute Alterungsbeständigkeit und hohe Wärmeformbeständigkeit.

Die in den Beispielen und Vergleichsversuchen genannten Teile sind Gewichtsteile.

**Beispiele und Vergleichsversuche**

**Beispiele 1 bis 4**

Herstellung des Pfropfmischpolymerisates

10 Teile Acrylsäurebutylester und 0,6 Teile Tricyclodecenylacrylat wurden in 90 Teilen Wasser unter Zusatz von 0,7 Teilen Na-$C_{14}$-Alkylsulfonat und 0,2 Teilen Kaliumperoxidisulfat unter Rühren innerhalb von 45 Minuten auf 65°C erwärmt. Nach dem Erreichen der Temperatur gab man eine Mischung von 50 Teilen Acrylsäurebutylester und 1,8 Teilen Tricyclodecenylacrylat innerhalb von 4 Stunden hinzu. Nach Ende des Zulaufs wurde der Polymerisationsansatz noch 1 Std. bei 65°C gerührt. Der Feststoffgehalt der Polymerisatdispersion betrug ca. 41 %. Nach Zusatz von 60 Teilen Wasser, 0,08 Teilen Dilauroylperoxid und 0,08 Teilen Kaliumperoxodisulfat liess man zur Herstellung des Pfropfmischpolymerisates 47 Teile Styrol innerhalb von 4 Stunden bei 65°C unter Rühren zulaufen. Der Umsatz, bezogen auf Styrol, war praktisch quantitativ. Die erhaltene Dispersion des Pfropfmischpolymerisates wurde durch Zusatz einer 0,75 %igen wässrigen Calciumchloridlösung gefällt. Das abgetrennte Festprodukt wurde mit dest. Wasser gewaschen, abfiltriert und im Vakuum bei 80°C getrocknet.

**Vergleichsversuche A bis D**

Herstellung des Pfropfmischpolymerisates

10,4 Teile Acrylsäurebutylester und 0,25 Teile Butandioldiacrylat wurden in 90 Teilen Wasser unter Zusatz von 0,7 Teilen Na-$C_{14}$-Alkylsulfonat und 0,2 Teilen Kaliumperoxidisulfat unter Rühren innerhalb von 45 Minuten auf 65°C erwärmt. Nach dem Erreichen der Temperatur gab man eine Mischung von 51 Teilen Acrylsäurebutylester und 0,75 Teilen Butandioldiacrylat innerhalb von 4 Stunden hinzu. Nach Ende des Zulaufs wurde der Polymerisationansatz noch 1 Std. bei 65°C gerührt. Der Feststoffgehalt der Polymerisatdispersion betrug ca. 41 %. Nach Zusatz von 60 Teilen Wasser, 0,08 Teilen Dilauroylperoxid und 0,08 Teilen Kaliumperoxodisulfat liess man zur Herstellung des Pfropfmischpolymerisates 47 Teile Styrol innerhalb von 4 Stunden bei 65°C unter Rühren zulaufen. Der Umsatz, bezogen auf Styrol war praktisch quantitativ. Die erhaltene Dispersion des Pfropfmischpolymerisates wurde durch Zusatz einer 0,75 %igen wässrigen Calciumchloridlösung gefällt. Das abgetrennte Festprodukt wurde mit dest. Wasser gewaschen, abfiltriert und im Vakuum bei 80°C getrocknet.

Die in der Tabelle angegebenen Teile an Pfropfmischpolymerisat, Homopolystyrol mit einer Viskositätszahl 74 ml/g und Poly(2,6-dimethyl-1,4-phenylen)ether wurden mit jeweils 0,8 Teilen Trinonylphenylphosphit auf einem Zweiwellenextruder bei 280°C geschmolzen, homogenisiert, gemischt und granuliert. Der Poly(2,6-dimethyl-1,4-phenylen)-ether hatte eine Grenzviskosität von 0,49 dl/g (gemessen in Chloroform bei 30°C).

Der Erweichungspunkt nach Vicat wurde nach DIN 53 460/B und der Schmelzindex nach DIN 53 735 bestimmt.

Tabelle

| Beispiele | Pfropfmischpolymerisat [Gew.Tle.] | Homopolystyrol [Gew.%] | Poly(2,6-dimethyl-1,4-phenylen)-ether | Erweichungspunkt nach Vicat [°C] | Schmelzindex 21,5 kg bei 250°C [g/10 min] |
|---|---|---|---|---|---|
| 1 | 33,75 | 41,25 | 25 | 102 | 261 |
| 2 | 24,75 | 30,25 | 45 | 134 | 32,7 |

Tabelle (Fortsetzung)

| Beispiele | Pfropfmischpolymerisat [Gew.Tle.] | Homopolystyrol [Gew.%] | Poly(2,6-dimethyl-1,4-phenylen)-ether | Erweichungspunkt nach Vicat [°C] | Schmelzindex 21,5 kg bei 250 °C [g/10 min] |
|---|---|---|---|---|---|
| 3 | 45 | 30 | 25 | 100 | 66,1 |
| 4 | 45 | 10 | 45 | 124 | 9,6 |
| Vergleichsversuche | | | | | |
| A | 33,75 | 41,25 | 25 | 103 | 180 |
| B | 24,75 | 30,25 | 45 | 132 | 22,5 |
| C | 45 | 30 | 25 | 101 | 35 |
| D | 45 | 10 | 45 | 122 | 3,7 |

## Patentansprüche

1. Thermoplastische Formmasse aus einer Mischung von

a) einem Styrolpolymerisat mit einer Viskositätszahl (nach DIN 53 726) im Beteich von 40 bis 140 ml/g als Hartkomponente,
b) einem vernetzten und bis zu einem Pfropfgrad von 10 bis 60 Gew.% mit Styrol gepfropften Polyacrylsäurealkylester mit 2 bis 8 Kohlenstoffatomen im Alkylrest und mit einer Glasübergangstemperatur unter 0°C als Weichkomponente und
c) einem Polyphenylenether mit mindestens 50 Benzolkernen in der Kette,

im Gewichtsverhältnis a : b wie (95 bis 40) : (5 bis 60) und (a + b) : c wie (5 bis 90):(95 bis 10), dadurch gekennzeichnet, dass die Weichkomponente in b) 0,5 bis 20 Gew.% des Acrylsäureesters des Tricyclodecenylalkohols der Formel I

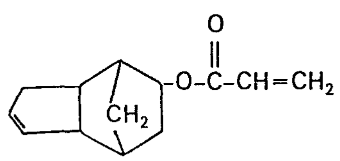

I

als Vernetzer einpolymerisiert enthält.

2) Thermoplastische Formmasse nach Anspruch 1, dadurch gekennzeichnet, dass die Weichkomponente in b) einen mittleren Teilchendurchmesser im Bereich von 0,05 bis 0,15 µm hat.

## Claims

1. A thermoplastic molding material comprising a mixture of

a) a styrene polymer, having an intrinsic viscosity (according to DIN 53, 726) of from 40 to 140 ml/g, as the hard component,
b) a poly(alkyl acrylate), alkyl being of 2 to 8 carbon atoms, which is crosslinked, is grafted to the extent of 10 to 60% by weight with styrene and has a glass transition temperature of less than 0°C, as the soft component, and
c) a polyphenylene ether with at least 50 benzene nuclei in the chain,

the weight ratio of a to b being (95–40) : (5–60) and the weight ratio of (a+b) to c being (5–90) : (95–10), wherein the soft component b) contains, as a crosslinking agent, from 0.5 to 20% by weight of the acrylate of tricyclodecenyl alcohol of the formula I

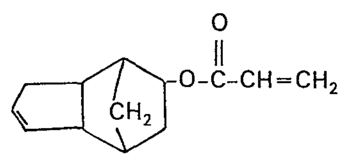

I

as copolymerized units.

2. A thermoplastic molding material as claimed in claim 1, wherein the soft component b) has a mean particle diameter of from 0.05 to 0.15 µm.

## Revendications

1. Masses de moulage thermoplastiques faites d'un mélange:

a) d'un polymère de styrène ayant un indice de viscosité (d'après la DIN 53 726) dans la gamme de 40 à 140 ml/g, en tant que composant dur,
b) d'un polyacrylate contenant 2 à 8 atomes de carbone dans le radical alkyle, réticulé et greffé de styrène jusqu'à un degré de greffage de 10 à 60 % en poids, ayant une température de verre inférieure à 0°C, en tant que composant mou, et
c) d'un éther de polyphénylène contenant au moins 50 noyaux benzéniques dans la chaîne,

dans un rapport pondéral a : b de (95 à 40) : (5 à 60) et (a+b) : c de (5 à 90) : (95 à 10), caractérisées en ce que le composant mou défini en b) contient

en liaison polymère, en tant que réticulant, 0,5 à 20 % en poids d'acrylate d'alcool tridécyldécénylique de formule I

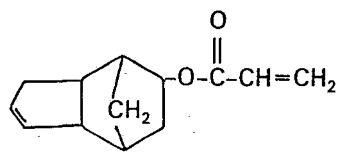

I

2. Masses de moulage thermoplastiques selon la revendication 1, caractérisées en ce que le composant mou défini en b) a un diamètre moyen de particules dans la gamme de 0,05 à 0,15 μ.